# DEMANDE DE BREVET EUROPEEN

(11) **EP 4 640 969 A1**
(43) Date de publication de la demande: **29.10.2025**
(21) Numéro de dépôt: 25171301.2
(22) Date de dépôt: 17.04.2025
(51) Int. Cl.: E04B 2/74, F16B 2/24, F16B 5/00, E04B 1/61

(54) **PROCÉDÉ DE MONTAGE D'UNE CLOISON ET KIT DE MONTAGE PERMETTANT DE METTRE EN OEUVRE LEDIT PROCEDE**

(30) Priorité: 24.04.2024 FR 2404231
(71) Demandeur: A. RAYMOND ET CIE, 38000 Grenoble (FR)
(72) Inventeur: GELIBERT, Stéphane, 38000 GRENOBLE (FR); VAZART, Eric, 38000 GRENOBLE (FR); BIZZINI, Olivier, 38000 GRENOBLE (FR); GARNIER, Alexis, 38000 GRENOBLE (FR)
(74) Mandataire: IP Trust

(57) **Abrégé**

L'invention concerne un procédé de montage d'une cloison contre au moins une face support (10a) d'un support plan (9a), la cloison comprenant deux faces principales essentiellement parallèles et reliées pour un contour, ledit contour comprenant, au moins trois tranches, par exemple quatre tranches, le procédé de montage comprenant la fixation d'au moins l'une des tranches contre au moins une face support (10a) avec des moyens de fixation, lesdits moyens de fixation comprennent au moins un clip (11c) et au moins une ouverture délimitée par un contour configuré pour coopérer par encliquetage avec l'au moins un clip (11c), l'au moins un clip (11c) étant fixé sur l'une de la face support (10a) ou de la tranche considérée, tandis que l'ouverture est formée sur l'autre de la face support (10a) ou de ladite tranche.

## Description

### DOMAINE DE L'INVENTION

La présente invention se rapporte au domaine du bâtiment, et notamment à l'aménagement intérieur d'un bâtiment. Plus particulièrement, la présente invention concerne un procédé de montage de cloison sur un support plan. Notamment, selon la présente invention le montage de la cloison est exécuté avec des moyens d'encliquetage.

### ARRIERE PLAN TECHNOLOGIQUE DE L'INVENTION

Le document FR 2 719 089 divulgue un dispositif d'assemblage d'une cloison, et notamment d'une cloison amovible. Ce dispositif, tel qu'illustré à la figure 4 du document FR 2 719 089, met en œuvre un profilé susceptible d'accueillir la tranche d'une cloison. Plus particulièrement, le profilé comprend une gouttière dans laquelle un bord de la cloison est destiné à être en butée. Le dispositif décrit dans le document FR 2 719 089 comprend également un clip destiné à coopérer avec le profile pour le maintien de la cloison.

Toutefois, ce dispositif n'est pas satisfaisant.

En effet, ce dispositif impose, après le couplage de la cloison avec le profilé, de procéder à la pose d'un clip afin de sécuriser ladite cloison avec ledit profilé.

Compte tenu de l'encombrement de la cloison et de la nécessité de maintenir temporairement cette dernière, cette dernière étape est source de complexité.

Par ailleurs, le clip, dès lors qu'il est en prise par encliquetage avec le profilé, reste visible et peut donc nécessiter la mise en œuvre d'un cache.

La présente invention vise donc à proposer un procédé de montage d'une cloison qui est simple à mettre en œuvre, et pour lequel l'ergonomie est améliorée au regard des solutions connues de l'état de la technique.

Un autre but de la présente invention est de proposer un procédé de montage d'une cloison pour lequel les manipulations de la cloison sont limitées après la mise en place de cette dernière.

Un autre but de la présente invention est de proposer un kit permettant de procéder au montage d'une cloison.

### BREVE DESCRIPTION DE L'INVENTION

Les buts de la présente invention sont, au moins en partie, atteints par un procédé de montage d'une cloison contre au moins une face support d'un support plan, la cloison comprenant deux faces principales essentiellement parallèles et reliées pour un contour, ledit contour comprenant, au moins trois tranches, par exemple quatre tranches, le procédé de montage comprenant la fixation d'au moins l'une des tranches contre au moins une face support avec des moyens de fixation, lesdits moyens de fixation comprennent au moins un clip et au moins une ouverture délimitée par un contour configuré pour coopérer par encliquetage avec l'au moins un clip, l'au moins un clip étant fixé sur l'une de la face support ou de la tranche considérée, tandis que l'ouverture est formée sur l'autre de la face support ou de ladite tranche.

Selon un mode de mise en œuvre, la fixation d'au moins l'une des tranches contre le support plan est précédée des étapes suivantes :
a) fixer sur l'une de la tranche et de la face support du support l'au moins un clip ;
b) former sur l'autre de la tranche et de la face support l'au moins une ouverture ;
c) positionner la tranche en vis-à-vis de la face support, et procéder à l'encliquetage de l'au moins un clip avec l'au moins un contour.

Selon un mode de mise en œuvre, l'au moins une ouverture est de forme allongée selon une direction d'élongation de manière à permettre un déplacement relatif, selon la direction d'élongation, de l'au moins un clip dans l'ouverture après exécution de l'étape c), le procédé de montage comprenant en outre une étape d), consécutive à l'étape c), d'ajustement du positionnement de la cloison, l'ajustement du positionnement comprenant un déplacement de ladite cloison selon la direction d'élongation.

Selon un mode de mise en œuvre, ledit procédé de montage comprend la fixation de l'une des tranches, dite tranche horizontale, avec la face support, dite face support horizontale, d'un support plan horizontal, et la fixation d'une autre des tranches, dite tranche latérale, avec la face support, dite face support verticale, d'un support plan vertical.

Selon un mode de mise en œuvre, l'étape a) comprend le vissage ou un griffage de l'au moins un clip.

Selon un mode de mise en œuvre, l'étape b) comprend la découpe de l'ouverture sur l'autre de la tranche et de la face support suivie d'un pliage du bord de ladite ouverture, ledit bord formant le contour destiné à coopérer avec l'au moins un clip par encliquetage.

Selon un mode de mise en œuvre, l'étape b) comprend l'exécution des sous-étapes suivantes :
b1) la création d'un logement débouchant par l'autre de la face support et de la tranche ;
b3) la pose d'une plaque longitudinale en recouvrement du logement, ladite plaque comprenant l'ouverture, ladite ouverture donnant accès au logement.

Selon un mode de mise en œuvre, l'étape b) comprend également l'exécution d'une étape b2) intercalée entre l'étape b1) et l'étape b3), ladite étape b2) comprenant le positionnement d'une cale de démontage dans le logement, ladite cale de démontage, dès qu'elle est positionnée dans le logement, étant susceptible d'adopter l'une ou l'autre d'une première position et d'une deuxième position, la première position étant une position neutre dans laquelle ladite cale de démontage reste à distance du clip, tandis que la deuxième position est une position pour laquelle la cale de démontage permet un désengagement du clip du contour de l'ouverture.

Selon un mode de mise en œuvre, le support plan comprend une lambourde et dont une face est en correspondance avec la face support.

L'invention concerne également un kit de montage d'une cloison contre une face support d'un support plan, la cloison comprenant deux faces principales essentiellement parallèles et reliées pour un contour, ledit contour comprenant, au moins trois tranches, par exemple quatre tranches, le kit de montage comprenant :
- un clip pourvu d'une base et de moyens d'encliquetage qui s'étendent à partir d'une première face de la base, ledit clip étant configuré pour être monté sur l'une de la face support ou d'une des tranches du contour, dite tranche de montage, par une deuxième face de la base et opposée à la première face ;
- une section d'encliquetage, essentiellement plane, et destinée à être solidaire de l'autre de la face support ou de la tranche de montage, la section d'encliquetage étant pourvue d'une ouverture, de forme allongée selon une direction d'élongation, délimitée par un contour d'encliquetage configuré pour coopérer par encliquetage avec les moyens d'encliquetage par engagement de ces derniers dans l'ouverture par une face supérieure de la section d'encliquetage selon une direction de montage allant de la face supérieure vers une face inférieure de la section d'encliquetage opposée à la face supérieure.

Selon un mode de mise en œuvre, l'ouverture présente une extension selon la direction d'élongation supérieure, avantageusement au moins deux fois supérieure, à l'étendue transversale de la section d'encliquetage de manière à permettre un ajustement de positionnement de la cloison par déplacement de cette dernière selon la direction d'extension de l'ouverture lorsque les moyens d'encliquetage sont en prise par encliquetage avec le contour d'encliquetage.

Selon un mode de mise en œuvre, la section d'encliquetage est formé sur la face support.

Selon un mode de mise en œuvre, la section d'encliquetage comprend une plaque de forme allongée et qui s'étend entre ses deux extrémités selon la direction d'élongation.

Selon un mode de mise en œuvre, la section d'encliquetage comprend une section centrale disposée entre deux sections d'extrémité, lesdites sections d'extrémité étant configurées pour permettre la fixation de la section d'encliquetage contre l'une de la face support et de la tranche de montage et par la face inférieure de la section d'encliquetage.

Selon un mode de mise en œuvre, la section d'encliquetage comprend des pliages de sorte que les sections d'extrémité se trouvent dans un premier plan et la section centrale se trouve dans un second plan différent du premier plan et en aval du premier plan selon une direction opposée à la direction de montage.

Selon un mode de mise en œuvre, les moyens d'encliquetage comprennent deux ailettes ressort, chaque ailette ressort comprend, selon une direction allant de la première face vers la deuxième face et dite direction principale, une première section essentiellement plane et une deuxième section également essentiellement plane, les deux premières sections s'étendant de manière divergente l'une par rapport à l'autre selon la direction principale, et les deux deuxièmes sections s'étendant de manière convergente l'une par rapport à l'autre selon la direction principale.

Selon un mode de mise en œuvre, les deux premières sections sont agencées pour, lors de l'engagement selon la direction de montage dans l'ouverture des moyens d'encliquetage, et au contact par glissement contre le contour d'encliquetage, se rapprocher d'une de l'autre afin de permettre l'insertion complète desdits moyens d'encliquetage dans l'ouverture.

Selon un mode de mise en œuvre, les deux deuxièmes sections sont agencées pour, après passage à travers l'ouverture des premières sections, buter contre le contour d'encliquetage par la face inférieure.

Selon un mode de mise en œuvre, chaque ailette ressort comprend une lamelle ressort solidarisant sa première section avec la base.

Selon un mode de mise en œuvre, la lamelle ressort relie un bord de la première section avec la base.

Selon un mode de mise en œuvre, la base comprend des moyens de rattrapage de jeu configurés pour rattraper un éventuel jeu selon la direction de montage.

Selon un mode de mise en œuvre, les moyens de rattrapage de jeu comprennent des languettes qui s'étendent à partir d'un bord de la base et qui sont pliées selon une direction opposée à la direction principale, lesdites languettes est configurées pour être en appui contre la face supérieure, et exercer une effort selon une direction opposée à la direction de montage.

Selon un mode de mise en œuvre, ledit kit de montage comprend également une cale de démontage, ladite cale de démontage comprend deux parois principales parallèles entre elles pourvues chacune d'un bord libre opposé à un fond de ladite cale de démontage, ladite cale de démontage étant destinée à être insérée, par son fond, dans un logement débouchant par l'une ou l'autre de la face support et de la tranche de montage, la section d'encliquetage étant disposée à l'aplomb dudit logement, la cale de démontage étant par ailleurs configurée pour adopter l'une ou l'autre d'une première position et d'une deuxième position dans le logement selon la direction de montage, la première position étant une position pour laquelle les bords libres sont maintenus à distance des premières sections, la deuxième position étant une position pour laquelle chaque bord libre impose aux premières sections un rapprochement de manière à permettre le retrait des moyens d'encliquetage selon une direction opposée à la direction de montage.

Selon un mode de mise en œuvre, la cale de démontage comprend également deux leviers latéraux qui s'étendent à partir du fond et selon une direction allant du fond vers l'un des bords libres, et se terminent chacun par une dent, les deux dents s'étendant chacune selon deux directions opposées, la section d'encliquetage comprend également deux butées configurées chacune pour coopérer avec l'une des dents lorsque la cale de démontage est dans sa deuxième position.

L'invention concerne également, un procédé de montage d'une cloison sur une face support d'une lambourde, la cloison comprenant deux faces principales essentiellement parallèles et reliées pour un contour, ledit contour comprenant au moins trois tranches, par exemple quatre tranches, le procédé mettant en œuvre le kit de montage selon la présente invention, et ledit procédé comprenant :
- une étape de fixation du clip sur l'une d'une tranche dite tranche de montage, et d'une face support ;
- une étape de formation de la section d'encliquetage sur l'autre de la tranche de montage et de la face support ;
- une étape de positionnement de la tranche de montage de la cloison en vis-à-vis de la face support en vue de l'engagement des moyens d'encliquetage dans l'ouverture.

Selon un mode de mise en œuvre, dans lequel ledit procédé comprend également la formation d'un un logement dans la lambourde, ledit logement débouchant par la face support, le procédé comprenant la disposition de la cale de démontage dans ledit logement, la section d'encliquetage étant disposée à l'aplomb dudit logement.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1] La figure 1 est une représentation schématique, selon une vue en perspective, d'une cloison et d'un support plan susceptibles d'être considérés dans le cadre de la présente invention ;
[Fig. 2] La figure 2 est une représentation schématique d'un clip conforme aux principes de la présente invention et selon une vue en perspective ;
[Fig. 3] La figure 3 est une représentation schématique d'une ouverture conforme aux principes exposés de la présente invention selon une vue en perspective ;
[Fig. 4] La figure 4 est une représentation schématique du clip de la figure 2 monté sur la tranche de montage ;
[Fig.5] La figure 5 est une représentation schématique selon une vue en perspective d'une plaque conforme aux principes exposés de la présente invention ;
[Fig.6] La figure 6 est une représentation schématique selon une vue en perspective d'une autre plaque conforme aux principes exposés de la présente invention ;
[Fig.7] La figure 7 est une représentation schématique de la plaque de la figure 7 montée sur la face support ;
[Fig.8] La figure 8 est une représentation schématique d'une cloison, notamment la fifure 7 représente le montage de clip et de plaques sur les tranches de ladite cloison ;
[Fig.9] La figure 9 est une représentation schématique du montage de clip et de plaques sur une face support horizontale et sur une face support verticale
[Fig.10] La figure 10 est une représentation schématique de l'engagement de clips, disposés sur la face support horizontale, dans les ouvertures de plaques fixées sur une tranche horizontale ;
[Fig.11] La figure 11 est une représentation schématique de l'encliquetage de clips, disposés sur la face support horizontale, avec les ouvertures de plaques fixées sur une tranche horizontale ;
[Fig.12] La figure 12 est une représentation schématique de l'encliquetage de clips, disposés sur la face support verticale, avec les ouvertures de plaques fixées sur une tranche verticale, l'encliquetage, étant obtenu par ajustement du positionnement de cloison ;
[Fig.13] La figure 13 est une représentation schématique d'une cale de démontage disposée dans le logement ;
[Fig.14] La figure 14 est une représentation schématique d'une cale de démontage isolée ;
[Fig.15] La figure 15 est une représentation schématique d'une cale de démontage disposée dans le logement et dans sa première position ;
[Fig.16] La figure 16 est une représentation schématique d'une cale de démontage disposée dans le logement et dans sa deuxième position ;
[Fig. 17] La figure 17 est une représentation schématique d'un autre clip conforme aux principes de la présente invention et selon une vue en perspective.

### DESCRIPTION DETAILLEE DE L'INVENTION

La présente invention concerne, selon un premier aspect, un procédé de montage d'une cloison sur une face support d'un support plan. Notamment la présente invention concerne la mise en œuvre de moyens de fixation afin de monter la cloison contre la face support par un simple encliquetage. Selon ce premier aspect, les moyens de fixation sont formés/fixés sur l'une et l'autre d'une tranche, dite tranche support de la cloison, et de la face support. La mise en œuvre de la présente invention permet notamment, en ultime étape, le positionnement et la solidarisation de la cloison avec la face support.

Il est entendu que les étapes d'habillage, de décoration, de finition peuvent être réalisées à l'issue du positionnement et de la solidarisation de la cloison avec la face support.

Il est entendu qu'une tranche est une face latérale essentiellement plane de la cloison.

Ainsi, selon un premier aspect, l'invention concerne un procédé de montage d'une cloison contre au moins une face support d'un support plan, la cloison comprenant deux faces principales essentiellement parallèles et reliées pour un contour, ledit contour comprenant quatre tranches, le procédé de montage comprenant la fixation d'au moins l'une des tranches contre au moins une face support avec des moyens de fixation, lesdits moyens de fixation comprennent au moins un clip et au moins une ouverture délimitée par un contour configuré pour coopérer par encliquetage avec l'au moins un clip, l'au moins un clip étant fixé sur l'une de la face support et de la tranche considérée, tandis que l'ouverture est formée sur l'autre de la face support et de ladite tranche.

Selon ce premier aspect, l'invention met en œuvre des moyens de fixation montés respectivement sur l'une ou l'autre d'une des tranches et de la face support. Toujours selon ce premier aspect, il est question de fixer/former les moyens de fixation préalablement au positionnement de la cloison, et notamment de la tranche considérée, sur la face support.

L'invention prévoit également, selon une variante, la formation de l'ouverture sur la face support. Notamment, la formation de l'ouverture peut comprendre un retrait de matière, un perçage, un emboutissage, un poinçonnage ou tout autre opération susceptible de conduire à la formation d'une ouverture. A cet égard, le support plan, selon cette variante, peut comprendre une poutre métallique pourvue d'une section centrale, essentiellement plane, ladite section centrale ayant une face en coïncidence avec la face support. Par exemple, une étape de poinçonnage peut être exécuté sur la face support de la poutre afin de former l'ouverture.

Selon une autre variante, il est possible de considérer le positionnement d'une pièce additionnelle pour former l'ouverture. Notamment, la pièce additionnelle peut comprendre la pose et/ou la fixation d'une section d'encliquetage sur la face support. Plus particulièrement, la section d'encliquetage comprend une plaque de forme allongée et qui s'étend entre ses deux extrémités selon une direction d'élongation, ladite plaque comprenant l'ouverture. Notamment, la plaque comprend deux faces opposées l'une de l'autre et dites, respectivement, face supérieure et face inférieure. De manière avantageuse, il est également possible de créer un logement débouchant par la face support (il peut toutefois être considéré de créer le logement dans la cloison et débouchant par une tranche). La plaque peut dans ces conditions être posée en recouvrement du logement par sa face inférieure, ladite plaque comprenant l'ouverture, ladite ouverture donnant accès au logement.

La section d'encliquetage (en d'autres termes la plaque) peut comprendre une section centrale disposée de deux sections d'extrémité, lesdites sections d'extrémité étant configurées pour permettre la fixation de la section d'encliquetage contre l'une de la face support et de la tranche de montage et par la face inférieure de la section d'encliquetage.

L'ouverture est délimitée par un contour d'encliquetage configuré pour coopérer par encliquetage avec les moyens d'encliquetage par engagement de ces derniers dans l'ouverture par la face supérieure de la section d'encliquetage selon une direction de montage allant de la face supérieure vers une face inférieure de la section d'encliquetage opposée à la face supérieure.

De manière avantageuse, l'ouverture présente une extension selon la direction d'élongation supérieure, avantageusement au moins deux fois supérieure, à l'étendue transversale de la section d'encliquetage de manière à permettre un ajustement de positionnement de la cloison par déplacement de cette dernière selon la direction d'extension de l'ouverture lorsque les moyens d'encliquetage sont en prise par encliquetage avec le contour d'encliquetage. Toujours de manière avantageuse, la section d'encliquetage peut comprendre des pliages de sorte que les sections d'extrémité se trouvent dans un premier plan et la section centrale se trouve dans un second plan différent du premier plan et en aval du premier plan selon une direction opposée à la direction de montage.

Selon le premier aspect, le procédé peut alors comprendre l'exécution des étapes suivantes :
a) fixer sur l'une de la tranche et de la face support du support l'au moins un clip ;
b) former sur l'autre de la tranche et de la face support l'au moins une ouverture ;
c) positionner la tranche en vis-à-vis de la face support, et procéder à l'encliquetage de l'au moins un clip avec l'au moins un contour.

La fixation du clip peut notamment comprendre la mise en œuvre de moyens de fixation, par exemple des vis.

A cet égard, le clip peut être pourvu d'une base et de moyens d'encliquetage qui s'étendent à partir d'une première face de la base. La base comprend également une deuxième face, opposée à la première face, et par laquelle le clip peut être monté sur l'une de la tranche et de la face support du support.

La base peut être pourvue de trous permettant notamment de fixer le clip sur l'une de la tranche et de la face support du support avec des vis par exemple.

Les moyens d'encliquetage peuvent comprendre deux ailettes ressort. Notamment, chaque ailette ressort peut comprendre, selon une direction allant de la première face vers la deuxième face et dite direction principale, une première section essentiellement plane et une deuxième section également essentiellement plane. Les deux premières sections s'étendent de manière divergente l'une par rapport à l'autre selon la direction principale, et les deux deuxièmes sections s'étendent de manière convergente l'une par rapport à l'autre selon la direction principale.

De manière particulièrement avantageuse, les deux premières sections sont agencées pour, lors de l'engagement dans l'ouverture des moyens d'encliquetage, et au contact par glissement contre le contour de l'ouverture (dit contour d'encliquetage), se rapprocher l'une de l'autre afin de permettre l'insertion complète desdits moyens d'encliquetage dans l'ouverture.

Toujours de manière avantageuse, les deux deuxièmes sections peuvent être agencées pour, après passage à travers l'ouverture des premières sections, buter contre le contour d'encliquetage.

Chaque ailette ressort peut comprendre une lamelle ressort solidarisant sa première section avec la base. Notamment, la lamelle ressort peut relier un bord de la première section avec la base.

De manière avantageuse, la base comprend des moyens de rattrapage de jeu configurés pour rattraper un éventuel jeu selon la direction de montage définie dans la suite de l'énoncé de la présente invention. Les moyens de rattrapage de jeu peuvent comprendre des languettes qui s'étendent à partir d'un bord de la base et qui sont pliées selon une direction opposée à la direction principale, lesdites languettes sont configurées pour être en appui contre la face supérieure, et exercer un effort selon une direction opposée à la direction de montage.

De manière avantageuse, l'au moins une ouverture peut être de forme allongée selon une direction d'élongation de manière à permettre un déplacement relatif, selon la direction d'élongation, de l'au moins un clip dans l'ouverture après exécution de l'étape c), le procédé de montage comprenant en outre une étape d), consécutive à l'étape c), d'ajustement du positionnement de la cloison, l'ajustement du positionnement comprenant un déplacement de ladite cloison selon la direction d'élongation. Ce dernier aspect permet de faciliter le montage, et notamment le positionnement puis l'encliquetage de la cloison au niveau d'au moins deux tranches différentes (et non parallèles).

Selon un deuxième aspect, l'invention concerne un kit de montage d'une cloison contre une face support d'un support plan, la cloison comprenant deux faces principales essentiellement parallèles et reliées pour un contour, ledit contour comprenant quatre tranches, le kit de montage comprenant :
- un clip pourvu d'une base et de moyens d'encliquetage qui s'étendent à partir d'une première face de la base, ledit clip étant configuré pour être monté sur l'une ou l'autre de la face support et d'une des tranches du contour, dite tranche de montage, par une deuxième face de la base et opposée à la première face ;
- une section d'encliquetage, essentiellement plane, et destinée à être solidaire de l'autre de la face support et de la tranche de montage, la section d'encliquetage étant pourvue d'une ouverture, de forme allongée selon une direction d'élongation, délimitée par un contour d'encliquetage configuré pour coopérer par encliquetage avec les moyens d'encliquetage par engagement de ces derniers dans l'ouverture par une face supérieure de la section d'encliquetage selon une direction de montage allant de la face supérieure vers une face inférieure de la section d'encliquetage opposée à la face supérieure.

Ce deuxième aspect reprend les caractéristiques décrites en relation avec le premier aspect.

L'invention concerne également un troisième aspect relatif à la mise en œuvre du kit de montage.

Plus particulièrement, l'invention concerne également un procédé de montage d'une cloison sur une face support d'une lambourde, la cloison comprenant deux faces principales essentiellement parallèles et reliées pour un contour, ledit contour comprenant quatre tranches, le procédé mettant en œuvre le kit de montage, et ledit procédé comprenant :
- une étape de fixation du clip sur une tranche dite tranche de montage, de la cloison ;
- une étape de formation de la section d'encliquetage sur la face support de la lambourde
- une étape de positionnement de la tranche de montage de la cloison en vis-à-vis de la face support en vue de l'engagement des moyens d'encliquetage dans l'ouverture.

La suite de l'énoncé de la présente invention propose une description détaillée d'exemples relatifs aux différents aspects décrits ci-avant.

La suite de l'énoncé décrit les différentes étapes d'un procédé de montage d'une cloison contre au moins un support. Il est entendu qu'une cloison au sens de la présente invention peut comprendre une séparation d'une pièce ou d'une façade d'un mur d'une pièce.

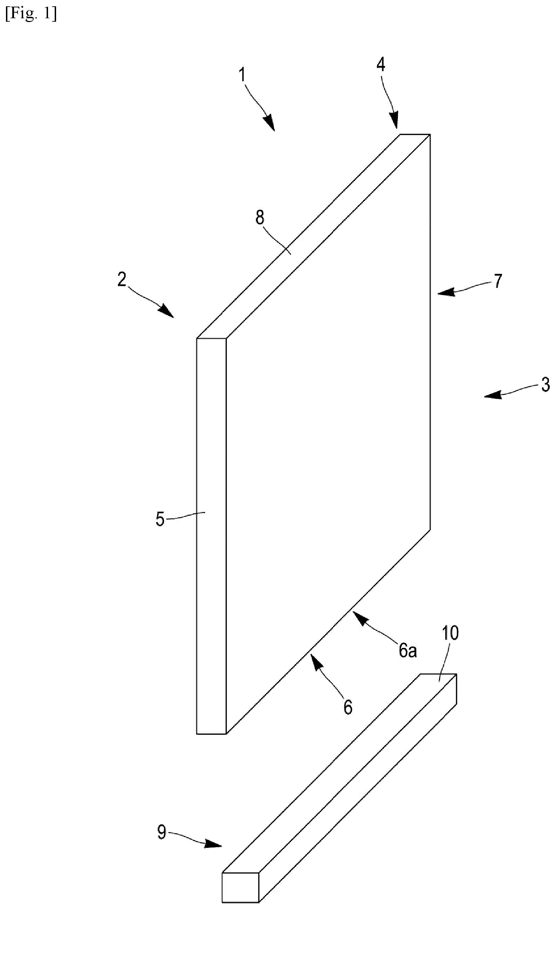

Par ailleurs, la cloison 1, telle que représentée à la figure 1, comprend deux faces principales 2 et 3, lesdites faces principales 2 et 3 étant reliées par un contour 4, ladite cloison ayant la forme d'un parallélépipède rectangle. A cet égard, le contour comprend quatre tranches 5, 6, 7, 8, et conformées de sorte que deux tranches adjacentes soient perpendiculaires.

La cloison peut comprendre tout type de matériaux, notamment la cloison peut comprendre du bois.

Le procédé selon la présente invention comprend la fourniture de la cloison 1 et d'une face support 10 d'un support plan 9. Le support plan 9 peut comprendre une autre cloison, une lambourde, une plinthe, le sol d'une pièce, un mur de séparation.

Par ailleurs, dès lors que le support plan comprend une cloison, la face support peut être soit une tranche soit la face principale de la cloison considérée.

Le procédé selon la présente invention est destiné à monter la cloison 1 contre la face support 10 du support plan 9. Ce montage met notamment en œuvre des moyens de fixation, ledit moyens de fixation comprenant au moins un clip et au moins une ouverture délimitée par un contour, dit contour d'encliquetage. Selon la présente invention, le contour d'encliquetage est configuré pour coopérer par encliquetage avec l'au moins un clip.

Ainsi, l'au moins un clip peut être fixé sur l'une de la face support et d'une tranche parmi les quatre tranches, dite tranche de montage, tandis que l'ouverture peut être formée sur l'autre de la face support et de la tranche de montage.

Par exemple, l'au moins un clip peut être monté sur la tranche de montage et l'ouverture formée sur la face support.

La suite de l'énoncé est limitée à la simple considération d'un clip monté sur la tranche de montage et d'une ouverture formée sur une face support. Toutefois, l'invention n'est pas limitée à ce seul aspect et l'homme du métier pourra considérer la situation inverse.

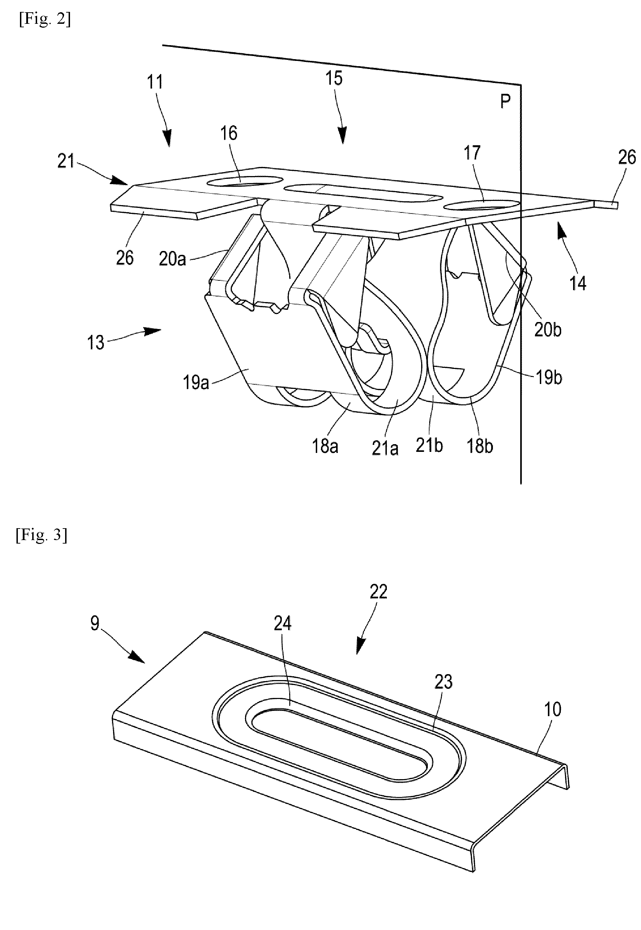

La figure 2 est une illustration d'un exemple de clip 11 susceptible d'être mis en œuvre pour la réalisation du procédé selon la présente invention.

Le clip 11 comprend une base 12 et des moyens d'encliquetage 13. La base 12 est de forme généralement plane et comprend deux faces opposées l'une de l'autre dites, respectivement, première face 14 et deuxième face 15.

La première face 14 est une face à partir de laquelle les moyens d'encliquetage 13 s'étendent tandis que la deuxième face 15 est une face par laquelle le clip est destiné à être monté contre la tranche de montage. Notamment, la base peut comprendre des trous 16 et 17 permettant de monter au moyen de vis le clip contre la tranche de montage. Le montage du clip contre la tranche de montage peut également être exécuté au moyen de pointes en projection par rapport à la deuxième face 15.

Les moyens d'encliquetage 13 comprennent deux ailettes ressort 18a et 18b. Les deux ailettes ressort 18a et 18b sont notamment symétriques l'une de l'autre par rapport à un plan de symétrie P, le plan de symétrie P étant perpendiculaire à la première face 14.

Plus particulièrement, chaque ailette ressort 18a et 18b peut comprendre, selon une direction allant de la première face 14 vers la deuxième face 15 et dite direction principale, une première section 19a, 19b essentiellement plane et une deuxième section 20a, 20b également essentiellement plane.

Les deux premières sections 19a et 19b s'étendent de manière divergente l'une par rapport à l'autre selon la direction principale, et les deux deuxièmes sections 20a et 20b s'étendent de manière convergente l'une par rapport à l'autre selon la direction principale.

Par « s'étendre de manière divergente selon la direction principale », on entend que l'écartement entre les deux premières sections augmente selon ladite direction.

Par « s'étendre de manière convergente selon la direction principale », on entend que l'écartement entre les deux deuxièmes sections diminue selon ladite direction.

Chaque ailette ressort 18a et 18b peut comprendre une lamelle ressort 21a, 21b solidarisant sa première section 19 avec la base. La lamelle ressort 21a, 21b peut comprendre un ruban métallique ondulé conférant à ladite lamelle ressort ses propriétés de ressort.

Ainsi, et cet aspect apparaîtra clairement dans la suite de l'énoncé, les deux premières sections 19a et 19b sont agencées pour, lors de l'engagement selon la direction de montage dans l'ouverture des moyens d'encliquetage, et au contact par glissement contre le contour d'encliquetage, se rapprocher d'une de l'autre afin de permettre l'insertion complète desdits moyens d'encliquetage dans l'ouverture.

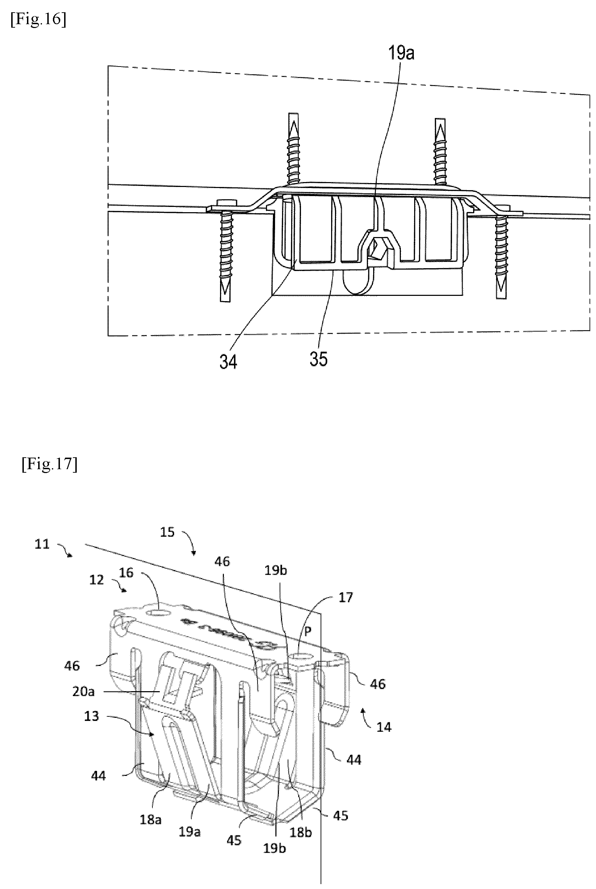

A la figure 17, on peut voir un autre clip susceptible d'être mis en œuvre dans le cadre de la présente invention.

Notamment, à l'instar du clip représenté. La figure 2, cet autre clip 11 comprend également un base 12 et des moyens d'encliquetage 13.

La base 12 peut comprendre en ces extrémités des encoches d'alignement 12a et 12b destinées à assurer l'alignement du clip lors du montage de ce derniers.
les moyens d'encliquetage peuvent être les mêmes que ceux du clip représenté à la figure 2. La base 12 est de forme généralement plane et comprend deux faces opposées l'une de l'autre dites respectivement, première face 14 et deuxième face 15.

La première face 14 est une face à partir de laquelle les moyens d'encliquetage 13 s'étendent tandis que la deuxième face 15 est une face par laquelle le clip est destiné à être monté contre la tranche de montage ou contre la face support du support plan 9.

Notamment, la base peut comprendre des trous 16 et 17 permettant de monter avec des moyens d'attache (par exemple des vis, des rivets, des clips...) le clip contre la tranche de montage.

Le clip 11 comprend deux parois latérales 44 qui s'étendent à partir de la première face 14, avantageusement perpendiculairement à ladite première face 14, et se terminent par deux parois convergentes 45. Notamment, chaque paroi convergente 45 prolonge une paroi latérale 44 à partir d'un bord de la paroi latérale 44. Il est entendu que les parois convergentes 45 prolongent chacune une paroi latérale 44 à partir d'un bord de la paroi latérale 44 opposée à la deuxième face 15. Il est entendu que les parois convergentes 45 convergent l'une vers l'autre.

Les moyens d'encliquetage 13 comprennent deux ailettes ressort 18a et 18b. Les deux ailettes ressort 18a et 18b sont notamment symétriques l'une de l'autre par rapport à un plan de symétrie P, le plan de symétrie P étant perpendiculaire à la première face 14, et naissent à la jonction d'une des parois latérale et d'une paroi convergente, et s'étendent vers la première face 14.

Plus particulièrement, chaque ailette ressort 18a et 18b peut comprendre, selon une direction allant de la première face 14 vers la deuxième face 15 et dite direction principale, une première section 19a, 19b essentiellement plane et une deuxième section 20a, 20b également essentiellement plane. Chaque ailette ressort 18a et 18b peut comprendre, de sa naissance vers son extrémité, une première section plane et une deuxième section plane. Les premières sections planes s'étendent de manière divergentes l'une par rapport à l'autre, et les deuxième sections planes s'étendent de manière convergente l'une par rapport à l'autre.

Le clip 11 peut également comprendre des taquets anti-cisaillement 46. Notamment ces taquets anti-cisaillement 46, au nombre de quatre, sont disposés par paires de part et d'autre des parois latérales 44. Plus particulièrement, les taquets anti-cisaillement 46 d'une paire, parallèles aux parois latérales 44, s'étendent chacun à partir des deux bords opposés de la base. Chaque taquet anti-cisaillement 46 peut se terminer par une section repliées intérieurement.

La figure 3 est une représentation schématique d'une ouverture conforme aux principes exposés de la présente invention. Notamment, l'ouverture 22 représentée à la figure 3 est obtenue directement par retrait de matière au niveau de la face support du support plan. Le support plan 9 comprend, dans le présent cas d'espèce, une poutre ou une lambourde métallique et dont la section transversale est rectangulaire ou carrée. Le retrait de matière peut faire intervenir toute technique connue de l'homme du métier exerçant dans le domaine de la mise en forme de structures métalliques.

Ainsi, la formation de l'ouverture 22 peut comprendre un perçage, un emboutissage, un poinçonnage ou tout autre opération susceptible de conduire à la formation de ladite ouverture 22.

Sur la figure 3, on peut également observer une zone emboutie 23 formée en périphérie de l'ouverture et notamment destinée au renforcement mécanique de la face support 10. Plus particulièrement, la zone emboutie 23 est en retrait par rapport à la face support 10.

L'ouverture 22 est délimité par un contour, dit contour d'encliquetage 24, configuré pour coopérer par encliquetage avec le clip 11.

Notamment, la coopération entre le clip 11 et le contour d'encliquetage 24 comprend l'engagement du clip 11 dans l'ouverture 22 par la face support 10. Lors de cet engagement, la divergence des premières sections 19a, 19b se réduit au fur et à mesure de l'engagement jusqu' à ce que les deuxièmes sections 20a, 20b atteignent le contour d'encliquetage 24. Les deuxièmes sections 20a, 20b passent ensuite dans l'ouverture 22 permettant ainsi, du fait de leur convergence, un écartement des premières sections 19a, 19b. Après passage à travers l'ouverture 22, les deuxièmes sections glissent contre le contour d'encliquetage par une face opposée à la face avant.

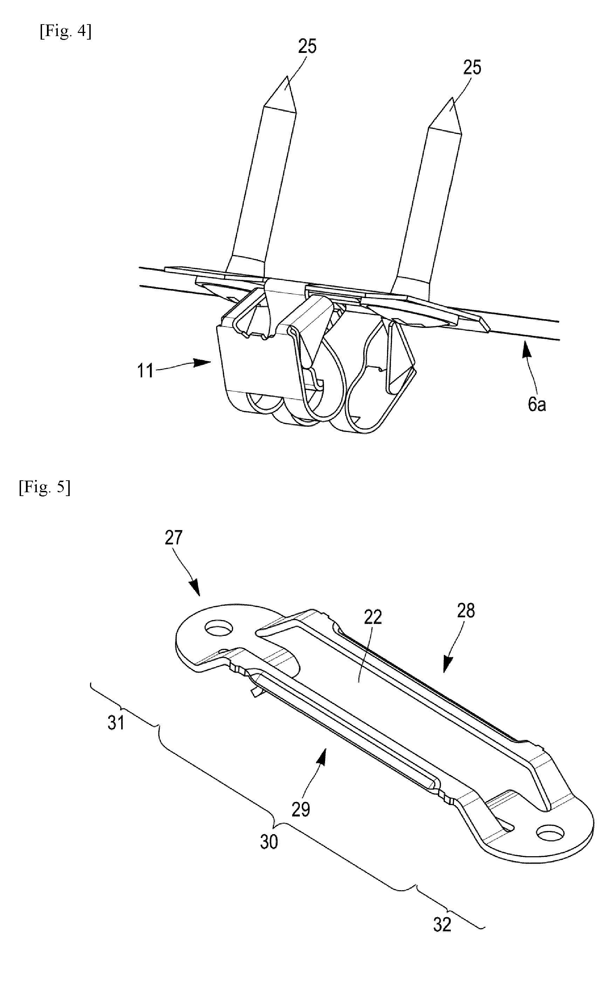

Ainsi, la fixation de la tranche de montage selon les termes de la présente invention peut être précédée des étapes suivantes :
a) fixer sur la tranche de montage le clip 11 (figure 4) ;
b) former sur la face support l'ouverture 22 (figure 3) ;
c) positionner la tranche de montage en vis-à-vis de la face support, et procéder à l'encliquetage du clip avec le contour d'encliquetage.

L'étape a) met en œuvre une fixation au moyen de vis 25 contre la tranche de montage 6a.

De manière avantageuse, la base 12 du clip 11 comprend des moyens de rattrapage de jeu configurés pour rattraper un éventuel jeu selon la direction de montage. Notamment, les moyens de rattrapage de jeu comprennent des languettes 26 (figure 2) qui s'étendent à partir d'un bord de la base 12 et qui sont pliées selon une direction opposée à la direction principale, lesdites languettes sont configurées pour être en appui contre la face support, et exercer une effort selon une direction opposée à la direction de montage.

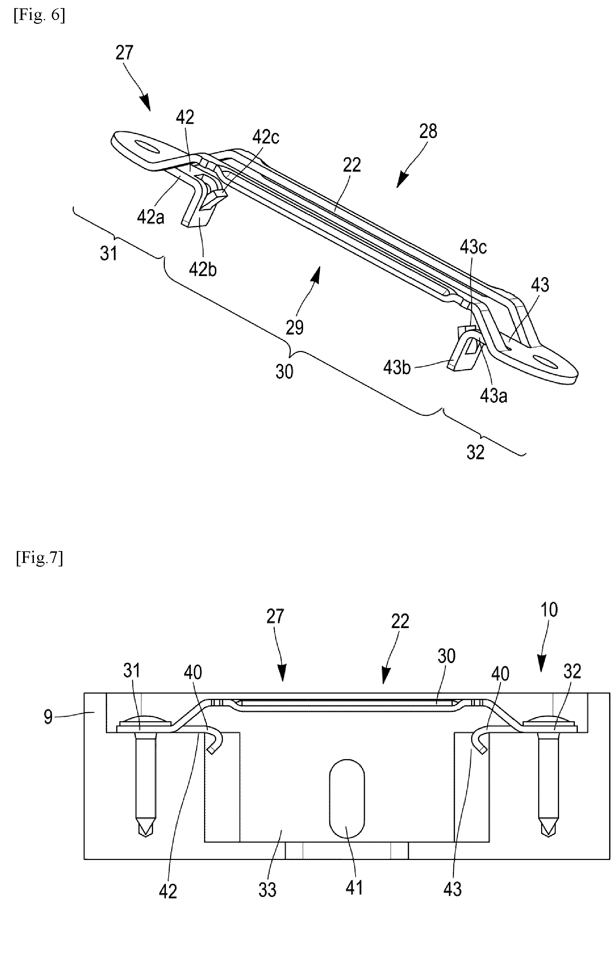

Selon une variante de la présente invention, la formation de l'ouverture 22 peut comprendre la pose d'une plaque 27 sur la face support 10 du support plan 9 (figure 7).

A cet égard, la plaque 27 peut comprendre une face supérieure 28 et une face inférieure 29 et comprendre l'ouverture 22. Notamment, la plaque 27, de forme allongée, s'étend entre deux extrémités selon une direction d'élongation. Plus particulièrement, la plaque 27 peut comprendre une section centrale 30 et deux sections d'extrémité 31, 32, lesdites sections d'extrémité étant configurées pour permettre la fixation de la section d'encliquetage contre la face support par la face inférieure de ladite plaque 27. Il est entendu que l'ouverture 22 est portée par la section centrale 30.

Ainsi, l'étape b) peut comprendre l'exécution d'une étape b3) de pose de la plaque 27, par sa face inférieure 29, contre la face support 10. La pose de la plaque 27 peut comprendre une étape de vissage.

En complément, l'étape b) peut également comprendre, et préalablement à l'exécution de l'étape b3), la création d'un logement 33 débouchant par la face support et de la tranche de montage (étape b1)). Selon ce dernier aspect, l'étape b3) est exécutée de sorte que la plaque se trouve en recouvrement du logement 33, et que l'ouverture donne accès au logement.

Tel qu'illustré à la figure 5, à la figure 6 et à la figure 7, la plaque 27 peut comprendre des pliages de sorte que les sections d'extrémité 31 et 32 se trouvent dans un premier plan et la section centrale 29 se trouve dans un second plan différent du premier plan et en aval du premier plan selon une direction opposée à la direction de montage.

Selon un mode de réalisation avantageux, l'ouverture est de forme allongée selon une direction d'élongation de manière à permettre un déplacement relatif, selon la direction d'élongation, du clip dans l'ouverture après exécution de l'étape c). Ce dernier aspect permet notamment de considérer une étape d), consécutive à l'étape c), d'ajustement du positionnement de la cloison, l'ajustement du positionnement comprenant un déplacement de ladite cloison selon la direction d'élongation.

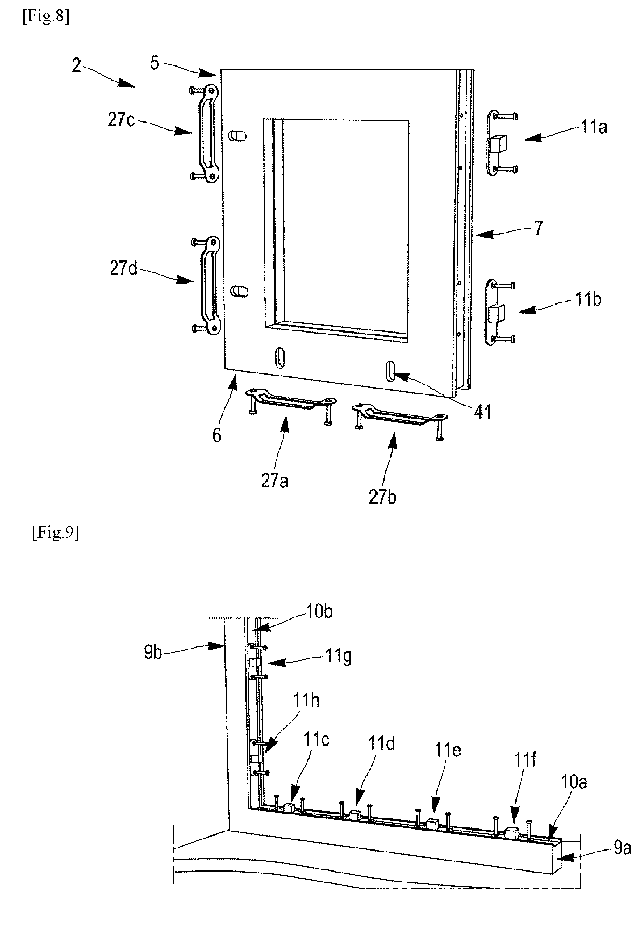

Ainsi, à la figure 8, on peut voir la pose de deux plaques 27a, 27b sur la tranche 6 (ci-après « tranche horizontale »), de deux autres plaques 27c, 27d sur la tranche 5 (ci-après « tranche verticale »), et deux clips 11a et 11b sur la tranche 7 (ci-après « autre tranche verticale ») d'une cloison 2.

La figure 9 représente de manière schématique le positionnement de clips 11c, 11d, 11e et 11f sur une face support 10a (ci-après « face support horizontale ») d'un support plan horizontal 9a. La figure 9 représente également le positionnement de clips 11g et 11h sur une face support 10b (ci-après « face support verticale ») d'un support plan vertical 9b, ledit support plan vertical 9b formant un angle droit avec le support plan horizontal 9a.

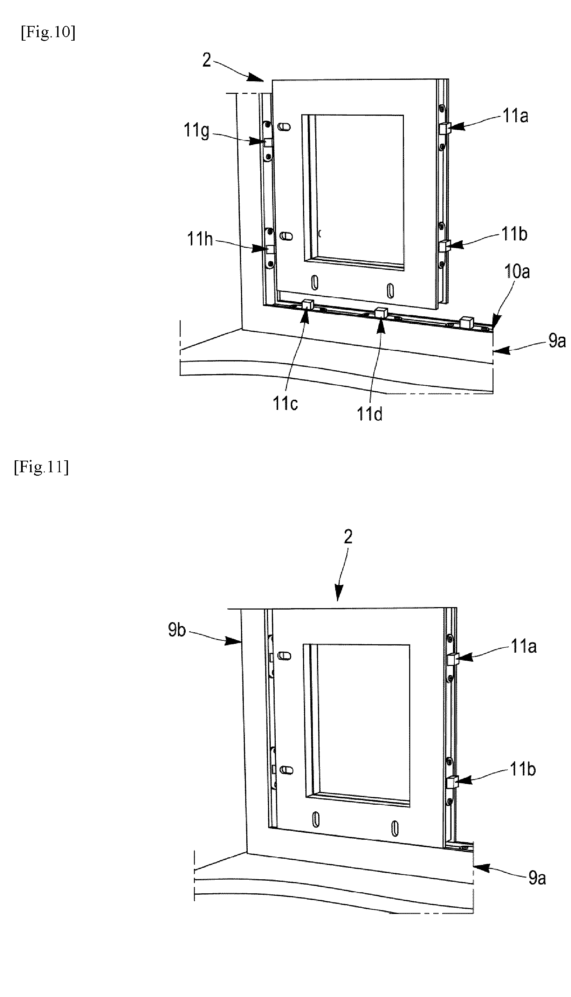

La figure 10 et la figure 11 représentent le montage de la cloison 2 contre la face support horizontale 10a. Notamment, et tel qu'illustré sur la figure 10, la tranche horizontale est disposée en vis-à-vis de la face support horizontale, et de manière à permettre l'engagement du clip 11c dans la plaque 27a et du clip 11d dans la plaque 27b (illustrés à la figure 8 et à la figure 9). La figure 10 représente la fin de l'engagement puis l'encliquetage, d'une part, du clip 11c avec la plaque 27a, et d'autre part, du clip 11d avec la plaque 27b.

Sur ces deux figures, la face verticale reste à distance de la face support verticale. Aussi, la considération d'une ouverture des plaques 27a et 27b de forme allongée peut permettre un déplacement de la cloison après encliquetage d'une part, du clip 11c avec la plaque 27a, et d'autre part, du clip 11d avec la plaque 27b.

A cet égard, l'ouverture des plaques 27a et 27b peut présenter une extension selon la direction d'élongation supérieure, avantageusement au moins deux fois supérieure, à l'étendue transversale de la section d'encliquetage des clips 11c et 11d.

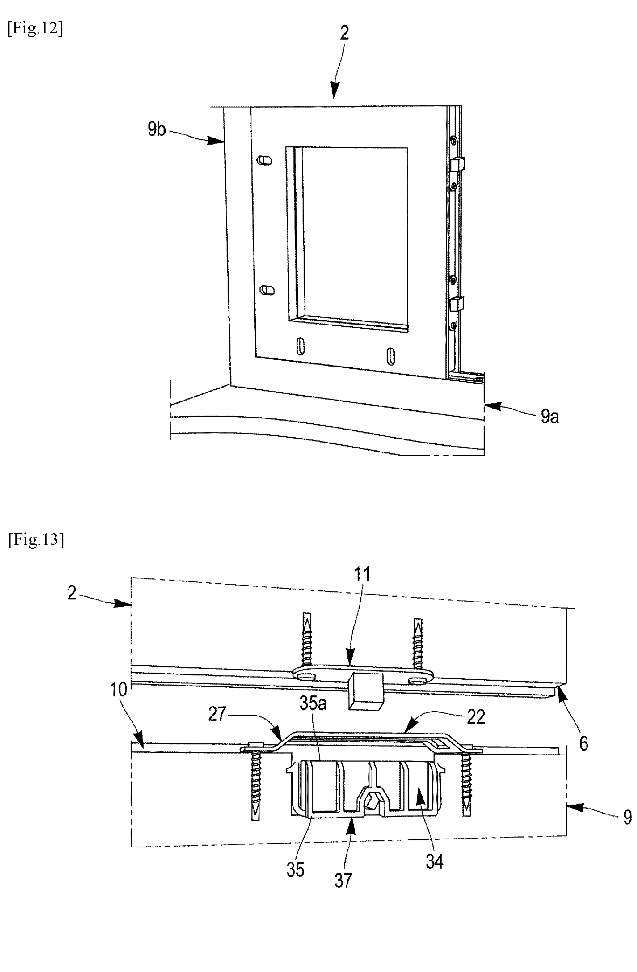

Ce dernier aspect permet ainsi un ajustement du positionnement de la cloison 2 tendant à rapprocher la tranche verticale 5 de la face support verticale 10b de manière à engager, d'une part, le clip 11g dans la plaque 27c, et d'autre part, le clip 11h dans la plaque 27d (figure 11 et figure 12).

Selon un mode de réalisation particulièrement avantageux, il peut être considéré de mettre en œuvre une cale de démontage 34. Notamment, et tel qu'illustré à la figure 13, la cale de démontage 34 peut être disposée dans le logement 33.

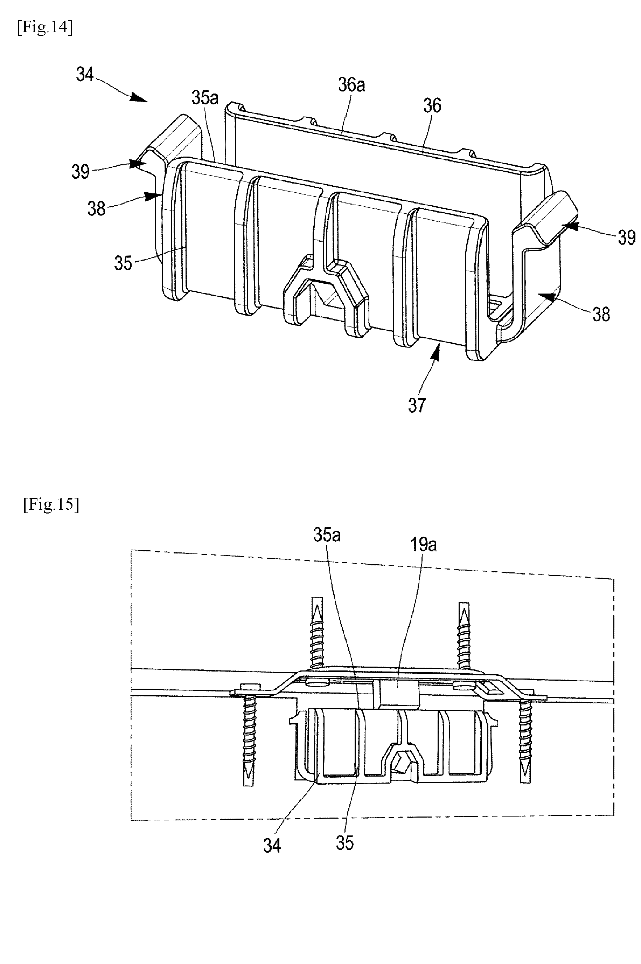

Tel qu'illustré à la figure 14, la cale de démontage 34 comprend deux parois principales 35, 36 parallèles entre elles pourvues chacune d'un bord libre 35a et 36a opposé à un fond 37 de ladite cale de démontage.

Notamment, et tel qu'illustré à la figure 13, la cale de démontage 34 est configurée à être insérée, par son fond 37, dans le logement 33. Plus particulièrement, la cale de démontage 34 est destinée à être insérée dans le logement 33 par son fond 37 et de sorte que l'ouverture 22 de la plaque 27 soit à l'aplomb d'une face de ladite cale de démontage opposée au fond 37.

Par ailleurs, la cale de démontage 34 est configurée pour adopter l'une ou l'autre d'une première position et d'une deuxième position dans le logement selon la direction de montage.

Notamment, la première position, illustrée à la figure 15, est une position pour laquelle les bords libres 35a et 36a sont maintenus à distance des premières sections 19a et 19b.

La deuxième position étant une position pour laquelle chaque bord libre 35a et 36a impose aux premières sections un rapprochement de manière à permettre le retrait des moyens d'encliquetage selon une direction opposée à la direction de montage figure 16.

Notamment, le passage de la première position vers la deuxième position de la cale de démontage 34 implique un déplacement de ladite cale selon une direction opposée à la direction de montage, tandis que le passage de la deuxième position vers la première position implique un déplacement de la cale de démontage dans le logement selon la direction de montage.

La cale de démontage peut également comprendre deux leviers latéraux 38 qui s'étendent à partir du fond 37 et selon une direction allant du fond 37 vers l'un des bords libres 35a, 36a, et se terminent chacun par une dent 39. Les deux dents 39 s'étendent chacune selon deux directions opposées.

Il est entendu que les leviers latéraux s'étendent chacun le long d'une face, dite face latérale, de la cale de démontage qui leur est propre et opposée l'une de l'autre. Plus particulièrement les deux faces latérales sont perpendiculaires aux parois principales 35 et 36.

La plaque 27 peut comprendre des moyens de butée, qui s'étendent à partir de la face inférieure de ladite plaque, et destinés coopérer avec les dents 39. Notamment, les moyens de butée 40 (figure 7) peuvent être configurés pour permettre le maintien de la cale de démontage dans la deuxième position par coopération desdits moyens de butée 40 avec les dents 39.

Notamment les moyens de butée, tel qu'illustré à la figure 5 et à la figure 7 peuvent comprendre deux lamelles, dites lamelles butée 42 et 43, qui s'étendent de leur naissance, à partir, respectivement, de la section d'extrémité 31 et de la section d'extrémité 32. Notamment, les lamelles butée 42 et 43 s'étendent l'une vers l'autre de manière sensiblement parallèle à la section centrale 30. Tel qu'illustré à la figure 7, les lamelles butée se terminent par une section arrondie selon la direction de montage.

De manière alternative, tel qu'illustré à la figure 6, chaque lamelle butée 42, 43 peut comprendre, de sa naissance vers son extrémité libre, une première partie 42a, 43a et une deuxième partie 42b, 43b. Les deux premières parties 42a, 43a s'étendent l'une vers l'autre, tandis que les deux deuxièmes parties 42b, 43b s'étendent à partir d'une première partie 42a, 43a selon la direction de montage. Chaque lamelle butée 42, 43 peut également comprendre un taquet 42c, 43c. Les taquets 42c, 43c s'étendant de manière convergente selon une direction opposée à la direction de montage et à partir chacun d'une des deuxièmes parties 42b, 43b.

Les taquets 42c, 43c sont notamment configurés pour former les moyens de butée coopérant avec les dents.

Enfin, le passage de l'une de la première position et de la deuxième position vers l'autre de ces deux positions peut être commandé via un outil destiné à agir directement sur la cale de démontage. Notamment, l'outil peut comprendre une tige destinée à être insérée dans une ouverture circulaire ou oblongue 41, donnant accès à la cale de démontage, et ménagée dans la cloison ou le support plan. L'outil peut notamment agir sur le fond de la cale de démontage. Selon cet aspect, l'ouverture 41 peut être ménagée à partir d'une face, du support plan, opposée à la face support. Selon un autre aspect l'ouverture peut être ménagée sur un flanc du support plan et être par voie de conséquence de forme oblongue.

L'invention concerne également un kit de montage d'une cloison contre une face support d'un support plan, la cloison comprenant deux faces principales essentiellement parallèles et reliées pour un contour, ledit contour comprenant au moins trois tranches, par exemple quatre tranches, le kit de montage comprenant :
- un clip pourvu d'une base et de moyens d'encliquetage qui s'étendent à partir d'une première face de la base, ledit clip étant configuré pour être monté sur l'une de la face support ou d'une des tranches du contour, dite tranche de montage, par une deuxième face de la base et opposée à la première face ;
- une section d'encliquetage, essentiellement plane, et destinée à être solidaire de l'autre
de la face support ou de la tranche de montage, la section d'encliquetage étant pourvue d'une ouverture, de forme allongée selon une direction d'élongation, délimitée par un contour d'encliquetage configuré pour coopérer par encliquetage avec les moyens d'encliquetage par engagement de ces derniers dans l'ouverture par une face supérieure de la section d'encliquetage selon une direction de montage allant de la face supérieure vers une face inférieure de la section d'encliquetage opposée à la face supérieure.

Ce kit de montage peut notamment reprendre pour partie ou dans leur entièreté les caractéristiques décrites en relation avec le procédé de montage.

L'invention concerne également la mise en œuvre du kit pour le montage d'une cloison.

Bien entendu l'invention n'est pas limite au(x) mode(s) de mise en œuvre décrit(s) et on peut y apporter des variantes de réalisation sans sortir du cadre de l'invention tel que défini par les revendications.

## Revendications

1. Procédé de montage d'une cloison (1) contre au moins une face support (10) d'un support plan (9), la cloison (1) comprenant deux faces principales (2, 3) essentiellement parallèles et reliées pour un contour (4), ledit contour (4) comprenant, au moins trois tranches (5, 6, 7, 8) , par exemple quatre tranches, le procédé de montage comprenant la fixation d'au moins l'une des tranches contre au moins une face support (10) avec des moyens de fixation, lesdits moyens de fixation comprennent au moins un clip (11) et au moins une ouverture (22) délimitée par un contour configuré pour coopérer par encliquetage avec l'au moins un clip (11), l'au moins un clip (11) étant fixé sur l'une de la face support (10) ou de la tranche (5, 6, 7, 8) considérée, tandis que l'ouverture (22) est formée sur l'autre de la face support (10) ou de ladite tranche.

2. Procédé de montage selon la revendication 1, dans lequel la fixation d'au moins l'une des tranches contre le support plan (9) est précédée des étapes suivantes :
a) fixer sur l'une de la tranche (5, 6, 7, 8) et de la face support (10) du support l'au moins un clip (11) ;
b) former sur l'autre de la tranche (5, 6, 7, 8) et de la face support (10) l'au moins une ouverture (22) ;
c) positionner la tranche (5, 6, 7, 8) en vis-à-vis de la face support (10), et procéder à l'encliquetage de l'au moins un clip (11) avec l'au moins un contour.

3. Procédé de montage selon la revendication 2, dans lequel l'au moins une ouverture (22) est de forme allongée selon une direction d'élongation de manière à permettre un déplacement relatif, selon la direction d'élongation, de l'au moins un clip (11) dans l'ouverture (22) après exécution de l'étape c), le procédé de montage comprenant en outre une étape d), consécutive à l'étape c), d'ajustement du positionnement de la cloison (1), l'ajustement du positionnement comprenant un déplacement de ladite cloison (1) selon la direction d'élongation.

4. Procédé de montage selon la revendication 2 ou 3, dans lequel ledit procédé de montage comprend la fixation de l'une des tranches, dite tranche horizontale, avec la face support (10), dite face support (10) horizontale, d'un support plan (9) horizontal, et la fixation d'une autre des tranches, dite tranche latérale, avec la face support (10), dite face support (10) verticale, d'un support plan (9) vertical.

5. Procédé de montage selon l'une des revendications 2 à 4, dans lequel l'étape b) comprend la découpe de l'ouverture (22) sur l'autre de la tranche (5, 6, 7, 8) et de la face support (10) suivie d'un pliage du bord de ladite ouverture (22), ledit bord formant le contour destiné à coopérer avec l'au moins un clip (11) par encliquetage.

6. Procédé de montage selon l'une des revendications 2 à 5, dans lequel l'étape b) comprend l'exécution des sous-étapes suivantes :
b1) la création d'un logement (33) débouchant par l'autre de la face support (10) et de la tranche (5, 6, 7, 8) ;
b3) la pose d'une plaque (27) longitudinale en recouvrement du logement (33), ladite plaque (27) comprenant l'ouverture (22), ladite ouverture (22) donnant accès au logement (33) ;
avantageusement, l'étape b) comprend également l'exécution d'une étape b2) intercalée entre l'étape b1) et l'étape b3), ladite étape b2) comprenant le positionnement d'une cale de démontage dans le logement (33), ladite cale de démontage, dès qu'elle est positionnée dans le logement (33), étant susceptible d'adopter l'une ou l'autre d'une première position et d'une deuxième position, la première position étant une position neutre dans laquelle ladite cale de démontage reste à distance du clip (11), tandis que la deuxième position est une position pour laquelle la cale de démontage permet un désengagement du clip (11) du contour de l'ouverture (22).

7. Procédé de montage selon l'une des revendications 1 à 6, dans lequel le support plan (9) comprend une lambourde et dont une face est en correspondance avec la face support (10).

8. Kit de montage d'une cloison (1) contre une face support (10) d'un support plan (9), la cloison (1) comprenant deux faces principales (2, 3) essentiellement parallèles et reliées pour un contour (4), ledit contour (4) comprenant, au moins trois tranches (5, 6, 7, 8) , par exemple quatre tranches, le kit de montage comprenant :
- un clip (11) pourvu d'une base (12) et de moyens d'encliquetage (13) qui s'étendent à partir d'une première face (14) de la base (12), ledit clip (11) étant configuré pour être monté sur l'une de la face support (10) ou d'une des tranches du contour (4), dite tranche de montage, par une deuxième face (15) de la base (12) et opposée à la première face (14) ;
- une section d'encliquetage, essentiellement plane, et destinée à être solidaire de l'autre de la face support (10) ou de la tranche de montage, la section d'encliquetage étant pourvue d'une ouverture (22), de forme allongée selon une direction d'élongation, délimitée par un contour d'encliquetage configuré pour coopérer par encliquetage avec les moyens d'encliquetage (13) par engagement de ces derniers dans l'ouverture (22) par une face supérieure (28) de la section d'encliquetage selon une direction de montage allant de la face supérieure (28) vers une face inférieure (29) de la section d'encliquetage opposée à la face supérieure (28).

9. Kit de montage selon la revendication 8, dans lequel l'ouverture (22) présente une extension selon la direction d'élongation supérieure, avantageusement au moins deux fois supérieure, à l'étendue transversale de la section d'encliquetage de manière à permettre un ajustement de positionnement de la cloison (1) par déplacement de cette dernière selon la direction d'extension de l'ouverture (22) lorsque les moyens d'encliquetage (13) sont en prise par encliquetage avec le contour d'encliquetage.

10. Kit de montage selon la revendication 9, dans lequel la section d'encliquetage comprend une plaque (27) de forme allongée et qui s'étend entre ses deux extrémités selon la direction d'élongation, avantageusement, la section d'encliquetage comprend une section centrale (30) disposée entre deux sections d'extrémité (31, 32), lesdites sections d'extrémité (31, 32) étant configurées pour permettre la fixation de la section d'encliquetage contre l'une de la face support (10) et de la tranche de montage et par la face inférieure (29) de la section d'encliquetage, encore plus avantageusement, la section d'encliquetage comprend des pliages de sorte que les sections d'extrémité (31, 32) se trouvent dans un premier plan et la section centrale (30) se trouve dans un second plan différent du premier plan et en aval du premier plan selon une direction opposée à la direction de montage.

11. Kit de montage selon l'une des revendications 8 à 10, dans lequel les moyens d'encliquetage (13) comprennent deux ailettes ressort (18a, 18b), chaque ailette ressort (18a, 18b) comprend, selon une direction allant de la première face (14) vers la deuxième face (15) et dite direction principale, une première section (19a, 19b) essentiellement plane et une deuxième section (20a, 20b) également essentiellement plane, les deux premières sections s'étendant de manière divergente l'une par rapport à l'autre selon la direction principale, et les deux deuxièmes sections s'étendant de manière convergente l'une par rapport à l'autre selon la direction principale, avantageusement, les deux premières sections sont agencées pour, lors de l'engagement selon la direction de montage dans l'ouverture (22) des moyens d'encliquetage (13), et au contact par glissement contre le contour d'encliquetage, se rapprocher d'une de l'autre afin de permettre l'insertion complète desdits moyens d'encliquetage (13) dans l'ouverture (22).

12. Kit de montage selon la revendication 11, dans lequel les deux deuxièmes sections sont agencées pour, après passage à travers l'ouverture (22) des premières sections, buter contre le contour d'encliquetage par la face inférieure (29).

13. Kit de montage selon la revendication 11 ou 12, dans lequel chaque ailette ressort (18a, 18b) comprend une lamelle ressort (21a, 21b) solidarisant sa première section (19a, 19b) avec la base (12), avantageusement, la lamelle ressort (21a, 21b) relie un bord de la première section (19a, 19b) avec la base (12).

14. Kit de montage selon l'une des revendications 8 à 13, dans lequel la base (12) comprend des moyens de rattrapage de jeu configurés pour rattraper un éventuel jeu selon la direction de montage.

15. Kit de montage selon la revendication 15, dans lequel les moyens de rattrapage de jeu comprennent des languettes (26) qui s'étendent à partir d'un bord de la base (12) et qui sont pliées selon une direction opposée à la direction principale, lesdites languettes (26) est configurées pour être en appui contre la face supérieure (28), et exercer une effort selon une direction opposée à la direction de montage.

16. Kit de montage selon l'une des revendications 10 à 15, dans lequel, la section d'encliquetage comprend des pliages de sorte que les sections d'extrémité (31, 32) se trouvent dans un premier plan et la section centrale (30) se trouve dans un second plan différent du premier plan et en aval du premier plan selon une direction opposée à la direction de montage, le kit de montage comprend également une cale de démontage, ladite cale de démontage comprend deux parois principales parallèles entre elles pourvues chacune d'un bord libre opposé à un fond de ladite cale de démontage, ladite cale de démontage étant destinée à être insérée, par son fond, dans un logement (33) débouchant par l'une ou l'autre de la face support (10) et de la tranche de montage, la section d'encliquetage étant disposée à l'aplomb dudit logement (33), la cale de démontage étant par ailleurs configurée pour adopter l'une ou l'autre d'une première position et d'une deuxième position dans le logement (33) selon la direction de montage, la première position étant une position pour laquelle les bords libres sont maintenus à distance des premières sections, la deuxième position étant une position pour laquelle chaque bord libre impose aux premières sections un rapprochement de manière à permettre le retrait des moyens d'encliquetage (13) selon une direction opposée à la direction de montage.

17. Kit de montage selon la revendication 17, dans lequel la cale de démontage comprend également deux leviers latéraux qui s'étendent à partir du fond et selon une direction allant du fond vers l'un des bords libres, et se terminent chacun par une dent, les deux dents s'étendant chacune selon deux directions opposées, la section d'encliquetage comprend également deux butées configurées chacune pour coopérer avec l'une des dents lorsque la cale de démontage est dans sa deuxième position.

18. Procédé de montage d'une cloison (1) sur une face support (10) d'une lambourde, la cloison (1) comprenant deux faces principales (2, 3) essentiellement parallèles et reliées pour un contour (4), ledit contour (4) comprenant au moins trois tranches (5, 6, 7, 8) , par exemple quatre tranches, le procédé mettant en œuvre le kit de montage selon l'une des revendications 8 à 17, et ledit procédé comprenant :
- une étape de fixation du clip (11) sur l'une d'une tranche dite tranche de montage, et d'une face support (10) ;
- une étape de formation de la section d'encliquetage sur l'autre de la tranche de montage et de la face support (10) ;
- une étape de positionnement de la tranche de montage de la cloison (1) en vis-à-vis de la face support (10) en vue de l'engagement des moyens d'encliquetage (13) dans l'ouverture (22).

19. Procédé de montage selon la revendication 18, mettant en œuvre le kit de montage selon la revendication 24, dans lequel ledit procédé comprend également la formation d'un un logement (33) dans la lambourde, ledit logement (33) débouchant par la face support (10), le procédé comprenant la disposition de la cale de démontage dans ledit logement (33), la section d'encliquetage étant disposée à l'aplomb dudit logement (33).
